# FASCICULE DE BREVET EUROPEEN

(11) **EP 0 873 253 B1**
(45) Date de publication et mention de la délivrance du brevet: **09.07.2003**
(21) Numéro de dépôt: 97911069.9
(22) Date de dépôt: 03.11.1997
(51) Int. Cl.: B60N 3/08, B60H 1/24

(54) **Cendrier aspirant**
Saug-Aschenbecher
Ashtray with suction device

(30) Priorité: 06.11.1996 BE 9600942
(43) Date de publication de la demande: 28.10.1998
(73) Titulaire: Morsat, Philippe, 4530 Villers-le-Bouillet (BE)
(72) Inventeur: Morsat, Philippe, 4530 Villers-le-Bouillet (BE)
(74) Mandataire: Vanderperre, Robert
(86) Numéro de dépôt international: BE9700127
(87) Numéro de publication internationale: WO98019881

(56) Documents cités:
- WO-A-95/24134
- DE-A- 3 635 066
- DE-A- 4 130 199
- FR-A- 2 670 724
- FR-A- 2 684 931
- US-A- 3 998 385
- US-A- 5 261 855

## Description

### Domaine de l'invention

La présente invention concerne d'une façon générale l'élimination des fumées et des odeurs qui se dégagent de cendres et mégots de cigarettes stagnants. Elle concerne plus particulièrement mais non exclusivement les cendriers de véhicules automobiles.

Les cendriers usuels présentent plusieurs inconvénients. Après usage, les mégots et cendres qu'ils contiennent dégagent des odeurs désagréables persistantes qui deviennent souvent incommodes. En outre, les cendres stagnantes sont sujettes à leur éparpillement sous l'effet du moindre souffle d'air, ce qui augmente sensiblement la viciation de l'atmosphère ambiante.

Les fumées sont également nuisibles pour la santé et en outre, de par leur charge en nicotine, elles produisent un dépôt sur le pare-brise, ce qui réduit la visibilité.

D'autre part, la plupart des fumeurs ne peuvent s'empêcher de vider le cendrier de leur véhicule dans les endroits publics, polluant ainsi l'environnement.

### Art antérieur

On a déjà prévu d'associer à un cendrier d'un véhicule automobile, des moyens d'aspiration communiquant avec la partie supérieure du cendrier afin d'aspirer les fumées. Un tel dispositif, connu par FR-A-2684931 (correspondant au préambule de la revendication indépendante), ne permet pas d'eviter de vider régulièrement le cendrier des cendres et mégots qui s'y trouvent.

Un autre dispositif, connu par FR-A-2670724, prévoit d'aspirer les cendres et mégots du cendrier d'un véhicule automobile vers un bac collecteur. Si les odeurs désagréables des cendres et des mégots stagnants peuvent ainsi être éliminées de l'habitacle, ce dispositif n'évite pas non plus de devoir vider et nettoyer régulièrement le bac collecteur.

### Exposé de l'invention

L'invention a pour but d'éviter les inconvénients et désagréments des cendriers connus et, à cet effet, elle propose un cendrier aspirant tel que défini dans les revendications.

Plus spécifiquement, le réceptacle destiné à recevoir le dépôt de cendres et de mégots communique par un moyen de communication avec une chambre d'aspiration. Celle-ci est munie de pales d'hélice entraînées par un moteur électrique. Dans un mode d'exécution avantageux, les pales d'hélice sont munies de lames coupantes qui déchiquettent les mégots et autres déchets.

Une variante d'exécution consiste à doter le cendrier aspirant suivant l'invention d'une disposition d'évacuation de fumées.

Les avantages de l'invention peuvent être résumés comme suit :
(a) elle évite l'éparpillement de cendres dans l'atmosphère ambiante lors de l'ouverture de vitres,
(b) elle évite la nécessité du vidage régulier du cendrier,
(c) elle élimine les fumées stagnantes et contribue ainsi à la salubrité de l'atmosphère.

L'invention contribue ainsi à la protection de l'environnement, elle améliore la sécurité visuelle dans les véhicules et minimise les risques d'inattention du conducteur d'un véhicule.

De plus, l'invention permet de pratiquement supprimer le réceptacle habituel des cendriers des véhicules automobiles et de simplifier et alléger la conception de l'équipement à l'intérieur de l'habitacle des véhicules en permettant d'intégrer le cendrier au tableau de bord dans lequel il peut se réduire à un simple orifice, guère plus grand que celui d'un allume-cigare.

D'autres avantages de l'invention apparaîtront à la lecture de la description qui suit.

### Brève description des dessins

La figure 1 est un schéma simplifié d'un mode de réalisation de l'invention.
La figure 2 illustre un autre mode d'exécution avantageux de l'invention.
La figure 3 est une vue en coupe suivant la ligne m de la figure 2.
Les figures 4 et 5 illustrent une forme de réalisation particulière de l'invention.
La figure 6 illustre l'intégration de l'invention dans le tableau d'un véhicule automobile.
La figure 7 représente une variante de réalisation de l'invention.

### Description de modes de réalisation de l'invention

Sur les dessins, le signe de référence 1 désigne un réceptacle de cendrier usuel disposé, par exemple, dans le tableau de bord d'un véhicule automobile. Conformément à l'invention, le fond du réceptacle 1 est percé d'un orifice qui met l'intérieur du réceptacle en communication avec une chambre d'aspiration 2 par l'intermédiaire d'un tuyau flexible 3. Dans le réceptacle 1, un compartiment 11 est aménagé par une paroi pour recevoir un mégot, ce compartiment étant ouvert à sa base pour communiquer avec un compartiment à cendres 12. Dans le fond du compartiment 12 s'amorce le tuyau 3 précité conduisant vers la chambre d'aspiration.

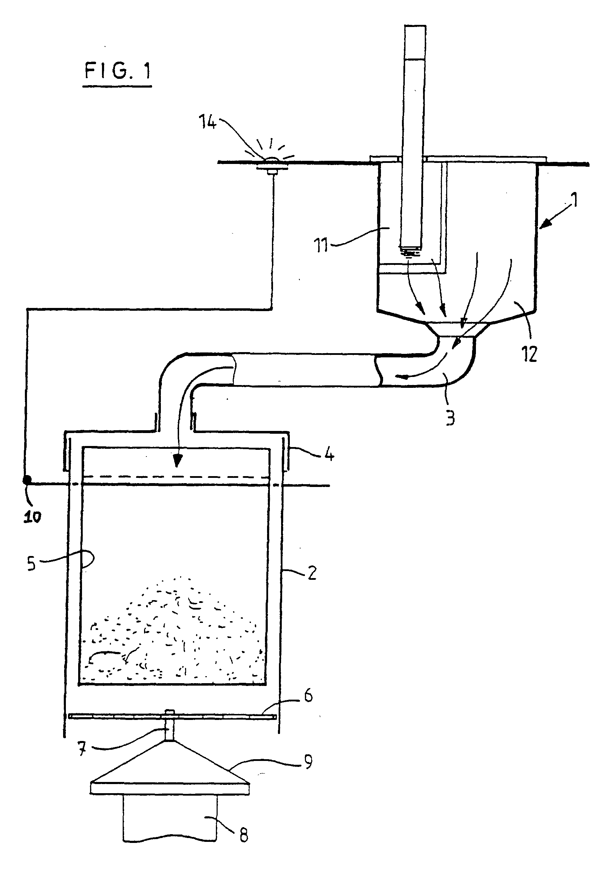

La chambre d'aspiration 2 est dotée d'un couvercle 4, par exemple un couvercle à emboîtement, que traverse le tuyau 3. Dans l'exemple montré en figure 1, la chambre d'aspiration 2 contient un bac collecteur 5.

Dans le fond de la chambre d'aspiration sont disposées des pales d'hélice 6 montées sur un axe 7 entraîné par un moteur électrique 8. Celui-ci est protégé par un écran 9. Le bac collecteur 5 est avantageusement doté d'un capteur, symbolisé en 10, qui détecte le niveau de remplissage du collecteur 5. Le capteur 10 est relié à une lampe-témoin 14 qui indique lorsque le collecteur est rempli et doit être vidé.

Lorsque des cendres et des déchets sont déposés dans le réceptacle 1 et lorsque l'aspirateur est mis en fonction, ces cendres et déchets sont aspirés dans le collecteur 5. Dès que celui-ci est rempli, le témoin de remplissage 14 s'allume, indiquant que le collecteur 5 doit alors être vidé. Pour ce faire, il suffit de détacher le couvercle 4 et de vider le collecteur 5.

Le dispositif est agencé, par exemple, pour que le moteur électrique 8 soit mis sous tension lors de l'ouverture du couvercle du cendrier 1 et soit mis hors tension lors de la fermeture du couvercle du cendrier 1.

Dans une variante de mode de réalisation, le dispositif peut être entièrement automatique. De petits capteurs de fumées, placés en des endroits choisis, dans un véhicule par exemple, sont agencés pour produire un signal électrique lorsqu'il reçoit un flux de fumées, ledit signal électrique étant utilisé pour ouvrir le couvercle du cendrier 1 et/ou mettre le moteur électrique 8 sous tension afin de mettre l'aspirateur en marche. Lors de la disparition complète des fumées le couvercle du cendrier 1 se referme et l'aspiration s'arrête.

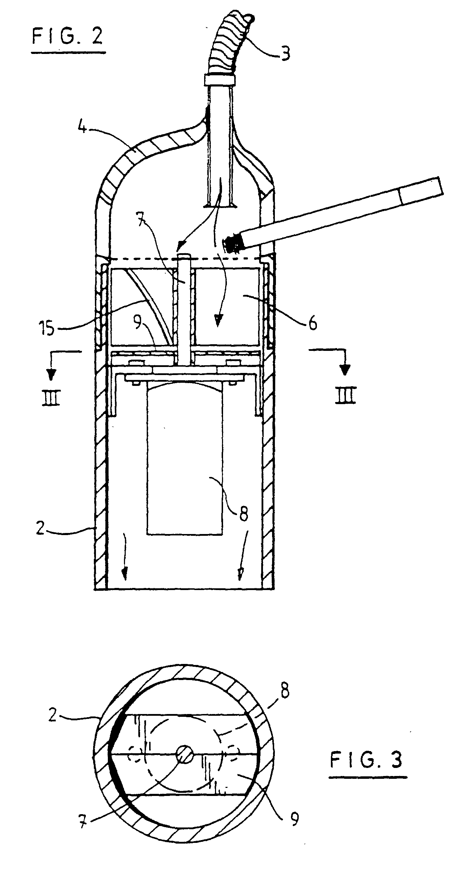

Dans le mode d'exécution représenté aux figures 2 et 3, les pales d'hélice 6 sont munies de lames coupantes 15. La chambre d'aspiration 2, dans ce cas, est dépourvue de bac collecteur. Lorsque les pales d'hélice sont entraînées en rotation par le moteur 8, les déchets se trouvent déchiquetés par les lames coupantes 15 et évacués par le dessous du véhicule. Ce mode d'exécution présente, par rapport à l'exemple de la figure 1, l'avantage supplémentaire d'éliminer la corvée du vidage périodique du bac collecteur. De plus, la chambre d'aspiration peut être de dimensions plus réduites. Il est également possible, avec le même effet, de prévoir une hélice aspirante en amont de la chambre d'aspiration et, en aval de celle-ci, une hélice à pales coupantes qui déchiquette les déchets et mégots.

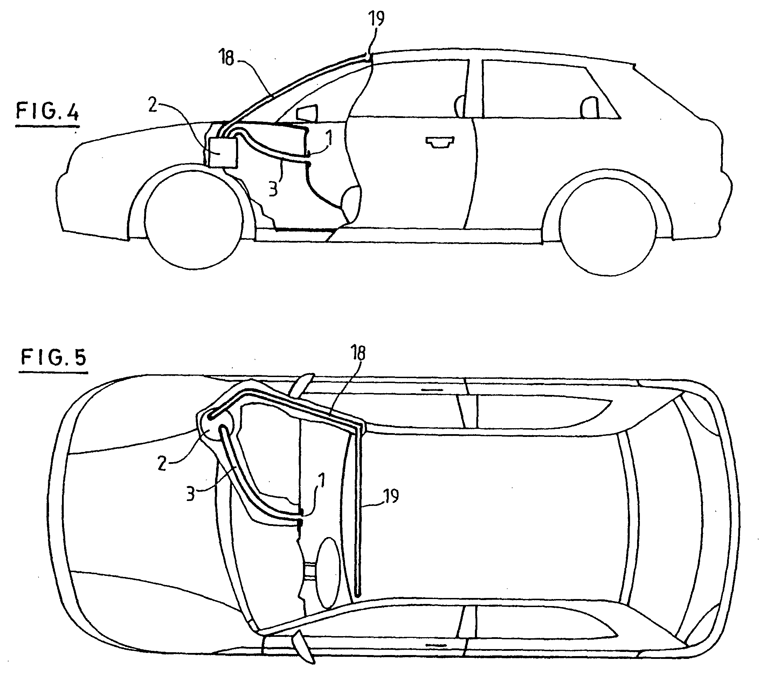

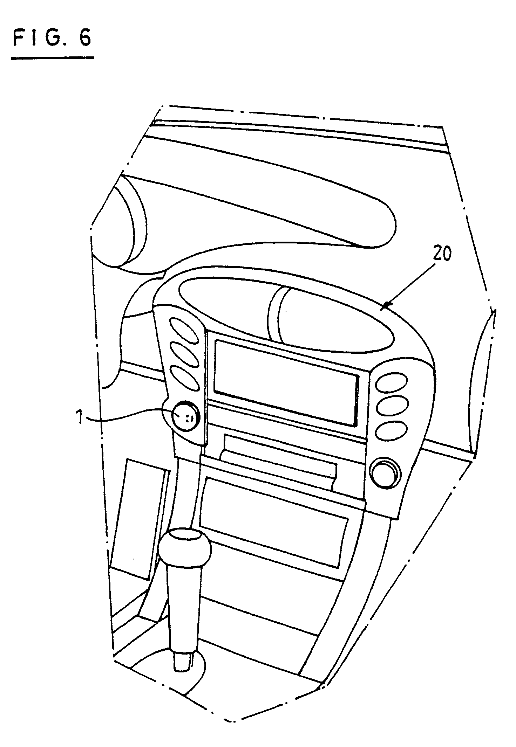

Une variante de réalisation illustrée aux figures 4 et 5 consiste à prévoir un moyen d'évacuation supplémentaire pour les fumées. La chambre d'aspiration 2 est reliée par un ou plusieurs tuyaux à un conduit 18 qui évacue les fumées vers l'extérieur, par exemple un conduit courant le long du pare-brise ou une galerie aspirante 19 qui évacue les fumées.

L'invention permet de pratiquement de supprimer le réceptacle habituel des cendriers des véhicules automobiles et de simplifier et alléger la conception de l'équipement à l'intérieur de l'habitacle d'un véhicule en permettant d'intégrer le réceptacle du cendrier au tableau de bord. La figure 6 montre un tableau de bord 20 sur lequel le signe de référence 1 montre l'accès au réceptacle du cendrier, qui se réduit à un simple orifice, guère plus grand que celui d'un allume-cigare.

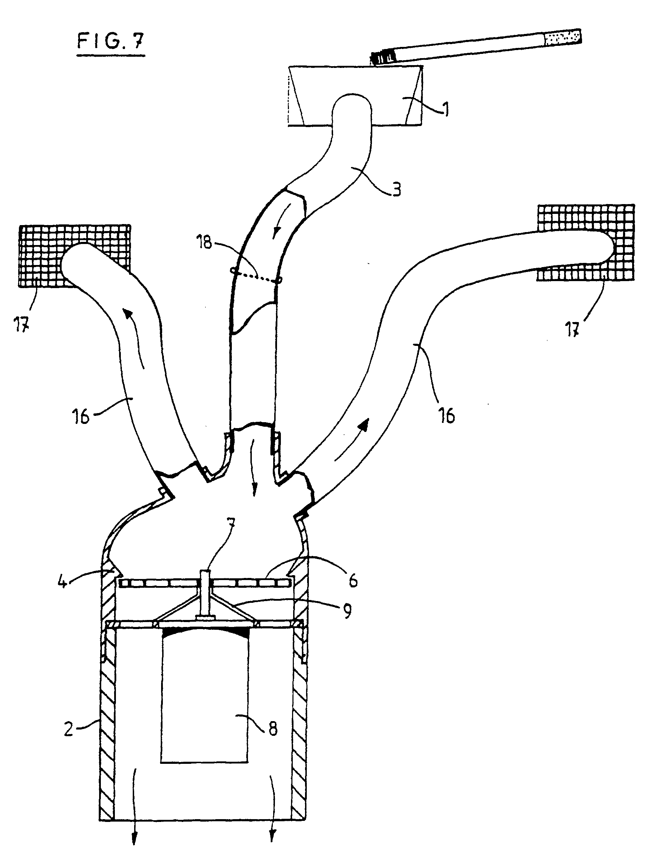

L'invention est avantageusement utilisée en outre pour aspirer de l' air frais dans l' habitacle d'un véhicule. Comme le montre la figure 7, sur le couvercle 4 de la chambre d'aspiration 2 viennent se connecter le conduit 3 venant d'un cendrier et un ou plusieurs conduits 16 allant déboucher dans une grille d'aération ou un dispositif diffuseur d'air. La figure montre deux conduits 16 connectés chacun à une grille d'aération 17. Un dispositif anti-retour 18 est prévu dans le conduit 3. De cette manière, en l'absence de cendres à évacuer, la chambre d'aspiration 2 (ouverte dans le bas) sert de prise d'air extérieur, moyennant inversion du sens de marche du moteur 8. Cet air frais aspiré est alors acheminé vers les grilles d'aération 17 par les tuyaux 16. Ceci permet d'introduire de l'air frais dans l'habitacle, par exemple par temps chaud ou dans les embouteillages. Cette particularité avantageuse peut être aisément intégrée sans altérer l'aspect esthétique du tableau de bord d'un véhicule.

Les exemples décrits dans ce qui précède sont des exemples donnés à titre illustratif et l'invention n'est nullement limitée à ces exemples.

## Revendications

1. Cendrier pour véhicule, comprenant un réceptacle (1) pour recevoir un dépôt de cendres et de mégots et une chambre d'aspiration (2) communiquant avec ledit réceptacle par un conduit (3) et reliée à un moyen d'évacuation des fumées vers l'extérieur, **caractérisé en ce que** :
- la chambre d'aspiration (2) est ouverte dans le bas et est équipée de pales d'hélice (6) montées sur un axe entraîné par un moteur (8),
- la chambre d'aspiration (2) est en outre reliée à des moyens d'aération (17) communiquant avec l'habitacle du véhicule, et
- le conduit (3) reliant le réceptacle (1) à la chambre d'aspiration (2) comprend un dispositif anti-retour (18), ledit dispositif anti-retour étant actionné en réponse à l'inversion du sens de marche du moteur d'aspiration (8) afin de couper la communication entre le réceptacle (1) et la chambre d'aspiration(2) et permettre à la chambre d'aspiration d'aspirer de l'air frais et de l'acheminer vers les moyens d'aération (17) de manière à introduire ledit air frais à l'intérieur du véhicule.

2. Cendrier pour véhicule suivant la revendication 1, **caractérisé en ce que** les pales d'hélice (6) sont munies de lames coupantes (15).

3. Cendrier pour véhicule suivant l'une quelconque des revendications précédentes, **caractérisé en ce que** ledit moyen d'évacuation des fumées vers l'extérieur consiste en une galerie aspirante (19) s'étendant sur une partie de la carrosserie du véhicule.

4. Cendrier pour véhicule suivant l'une quelconque des revendications précédentes, **caractérisé en ce que** la chambre d'aspiration (2) contient un bac collecteur (5).

5. Cendrier pour véhicule suivant la revendication 4, **caractérisé en ce que** le bac collecteur (5) est doté d'un capteur (10) produisant un signal pour indiquer un niveau de remplissage prédéterminé du bac collecteur.

## Patentansprüche

1. Aschenbecher für Fahrzeug, mit einem Einwurfschacht (1) für Aschen und Zigarettenresten und einem Absaugraum (2) die über eine Rohrleitung (3) mit dem Einwurfschacht angeschlossen ist und die mit einer Abzugvorrichtung für Abzug des Rauchs hinaus, **dadurch gekennzeichnet,**
**dass** der Absaugraum (2) ein offene untere Ende aufweist und mit Luftschraubenblätter (6) vorgesehen ist, die auf einer durch einen Motor (8) antreibbare Achse angeordnet sind,
**dass** der Absaugraum (2) ferner mit Lüftungsvorrichtungen (17) verbunden ist, die in den Fahrzeuginnenraum einmünden,
**dass** in die zwischen dem Einwurfschacht (1) und dem Absaugraum (2) angeordneten Rohrleitung (3) ein Sperrventil (18) vorgesehen ist, das bei Umschaltung des Absaugmotors (8) angetrieben ist, so dass die Verbindung zwischen dem Einwurfschacht (1) und dem Absaugraum (2) gesperrt wird, und
**dass** der Absaugraum frische Luft absaugt und diese gegen die Lüftungsvorrichtungen (17) befördert wird, wobei die frische Luft in das Fahrzeug eingeführt wird.

2. Aschenbecher für Fahrzeug nach Anspruch 1, **dadurch gekennzeichnet, dass** die Luftschraubenblätter (6) mit Schneidklinge (15) vorgesehen sind.

3. Aschenbecher für Fahrzeug nach Anspruch 1, **dadurch gekennzeichnet, dass** die Rauchabzugvorrichtungen eine Saugstrecke (19) ist.

4. Aschenbecher für Fahrzeug nach Anspruch 1, **dadurch gekennzeichnet, dass** in dem Absaugraum (2) ein Sammelbehälter vorgesehen ist.

5. Aschenbecher für Fahrzeug nach Anspruch 4, **dadurch gekennzeichnet, dass** der Sammelbehälter (5) mit einem Sensor (10) vorgesehen ist, die ein Signal erzeugt um eine vorherbestimmte Füllungshöhe des Sammelbehälters zu zeigen.

## Claims

1. An ashtray for vehicle, including a receptacle (1) for receiving ashes and cigarette butts and a suction chamber (2) operatively connected through a duct (3) to said receptacle and connected to evacuation means for removing smoke outward, **characterized in that** the suction chamber (2) has an open lower end and is equipped with propeller blades (6) mounted to an axle driven by an engine (8),
**in that** the suction chamber (2) is further connected to airing means (17) operatively connected to the interior of the passenger compartment of the vehicle, and
**in that** said duct (3) connecting the receptacle (1) to the suction chamber (2) includes blocking valve means (18), said blocking valve means being operated in response to the direction of motion of the suction engine (8) being inverted to block the communication between the receptacle (1) and the suction chamber (2) and allow the suction chamber to draw in fresh air and direct same to the airing means (17), thereby to supply said fresh air into the passenger compartment of the vehicle.

2. An ashtray for vehicle according to claim 1, **characterized in that** the propeller blades (6) are fitted with cutting edges (15).

3. An ashtray for vehicle according to any of the preceding claims, **characterized in that** said smoke evacuation means consists in a suction gallery (19) extending on a portion of the vehicle body.

4. An ashtray for vehicle according to any of the preceding claims, **characterized in that** the suction chamber (2) includes a collecting tray (5).

5. An ashtray for vehicle according to any of the preceding claims, **characterized in that** the collecting tray (5) is fitted with a sensor (10) to produce a signal indicating a predetermined filling level of the collecting tray.
